# EUROPÄISCHE PATENTANMELDUNG

(11) **EP 1 094 002 A2**
(43) Veröffentlichungstag der Anmeldung: **25.04.2001**
(21) Anmeldenummer: 00121735.5
(22) Anmeldetag: 05.10.2000
(51) Int. Cl.: B64G 1/36, G05D 1/00

(54) **Regelungsanordnung und Regelungsverfahren für Satelliten**

(30) Priorität: 18.10.1999 DE 19950247
(71) Anmelder: Astrium GmbH, 81663 München (DE)
(72) Erfinder: Jörck, Hartmut, 24649 Wiemersdorf (DE)

(57) **Zusammenfassung**

Beschrieben wird eine Regelungsanordnung für einen Satelliten, mit
mindestens einen Sensor (21) zur Erfassung von Referenzzielen, verbunden mit Einrichtungen (2211,2212) zur Auswahl und zur Positionsbestimmung von Referenzzielen sowie mit
einer Einrichtung (222) zur Schätzung von Modellparametern des Satelliten und externer Störungen, einem Speichern (24) für Referenzzielkatalog und eine Referenztrajektorie,
einem Regler (23) zur Lageregelung des Satelliten,
einem Filter (2213), der mit der Einrichtung zur Positionsbestimmung der Referenzziele, der Einrichtung zur Schätzung von Modellparametern, dem ersten Speicher und dem Regler verbunden ist.
Außerdem wird ein Regelungsverfahren für einen Satelliten beschrieben mit folgenden Schritten:
Erfassung, Positionsbestimmung und Auswahl von Referenzzielen,
Schätzung von Modellparametern des Satelliten und externer Störungen,
Berechnung aktueller Lage- und Bewegungszustände des Satelliten auf Basis der geschätzten Modellparameter mit Hilfe dynamischer Modelle der Satellitenbewegung,
Vergleich der erfaßten Position ausgewählter Referenzziele mit gespeicherten Referenzzieldaten,
Korrektur der berechneten Lage- und Bewegungszustände in Abhängigkeit vom Vergleichsergebnis.

## Beschreibung

Die vorliegende Erfindung betrifft eine Regelungsanordnung und ein Regelungsverfahren für Satelliten. Es erfolgt dabei eine Erfassung von Referenzzielen, beispielsweise von Sternen.

Aus dem Stand der Technik sind bereits Verfahren bekannt, bei denen ein Satellit Sterne als Referenzziele erfaßt und nach einer Auswertung der erfaßten Referenzziele eine Regelung der Satelliten erfolgen kann. Hierzu wird beispielhaft auf US 4 801 202 und US 5 821 526 verwiesen.

Problematisch bei Positionsbestimmungen im All ist jedoch, daß nur eine Positionsbestimmung eines Sterns relativ zu der Position eines Satelliten erfolgen kann. Die Position der Satelliten und der Sterne sind dabei nur mit einer begrenzten Genauigkeit bekannt. Es wirken außerdem Störeinflüsse auf den Satelliten ein, die seine Bewegung gegenüber einer gewünschten Bahnbewegung verändern und somit die Bestimmung von Sternpositionen relativ zu einer gewünschten Satellitenposition erschweren.

Aufgabe der vorliegenden Erfindung ist es daher, eine Regelungsanordnung und ein Regelungsverfahren für einen Satelliten bereitzustellen, daß möglichst hohe Lageregelungsgenauigkeiten für den Satelliten ermöglicht.

Diese Aufgabe wird gelöst durch die Merkmale der Patentansprüche 1 und 7.

Eine erfindungsgemäße Regelungsanordnung für einen Satelliten umfaßt
mindestens einen Sensor zur Umfassung von Referenzzielen, verbunden mit
   - einer Einrichtung zur Auswahl von Referenzzielen und
   - einer Einrichtung zur Positionsbestimmung der Referenzziele (die in der Regel relativ zum Satelliten-Koordinatensystem erfolgt),
eine Einrichtung zur Schätzung von Modellparametern des Satelliten und externer Störungen, die auf den Satelliten einwirken (Parameteridentifikation),
einen ersten Speicher, der einen Referenzzielkatalog enthält,
einen zweiten Speicher, der eine Referenztrajektorie enthält (diese kann in Form einer konkreten Bahnbeschreibung oder einer Berechnungsvorschrift zur Berechnung der Referenztrajektorie im Speicher enthalten sein),
einen Regler, der mit Stellgliedern zur Lageregelung des Satelliten verbunden ist,
ein Filter, das Modelle der Satellitenbewegung enthält und der auf den Satelliten einwirkenden externen Störungen enthält und das mit der Einrichtung zur Positionsbestimmung der Referenzziele, der Einrichtung zur Schätzung von Modellparametern, dem ersten Speicher und dem Regler verbunden ist. Als Resultat der Modelle werden Zustandsgrößen für die externen Störungen und für die Satellitenbewegung geliefert.

Bei einer solchen erfindungsgemäßen Anordnung werden somit nicht nur Referenzziele, wie beispielsweise Sterne, erfaßt, ausgewählt und deren Position bestimmt, sondern es werden zusätzlich noch Modellparameter, wie beispielsweise das Trägheitsmoment des Satelliten und Parameter für externe Störungen, die auf den Satelliten wirken, wie beispielsweise magnetische Kräfte, Gravitationskräfte, Sonnenwind etc. in einer entsprechenden Einrichtung geschätzt und können somit zur Verbesserung der Zustandsgrößen dienen, die als Resultate der Modelle geliefert werden. Als weitere Referenz für eine Positionsbestimmung und eine Lageregelung dient ein Referenzzielkatalog. Aus den geschätzten Größen kann mit dem Filter eine aktuelle Position des Satelliten berechnet und mit Hilfe des Referenzzielkataloges abgeglichen werden. Durch Vergleich mit einer Referenztrajektorie kann mit Hilfe eines Reglers eine Lageregelung des Satelliten erfolgen.

Zur Vereinfachung der Anordnung kann vorgesehen werden, daß das Filter, die Einrichtung zur Positionsbestimmung der Referenzziele und die Einrichtung zur Auswahl von Referenzzielen in einer erweiterten Filteranordnung zusammengefaßt sind. Zusätzlich kann in dieser erweiterten Filteranordnung auch noch die Einrichtung zur Schätzung von Zustandsparametern und externen Störungen mit integriert sein. Es kann dabei entweder das Filter selbst als Kalman-Filter oder die erweiterte Filteranordnung als extended Kalman-Filter ausgebildet sein.

Als Stellglieder, die mit dem Regler verbunden sind, können Triebwerke verwendet werden, zum Beispiel elektrische Triebwerke. Um eine möglichst feine Steuerung der Effektivität der Triebwerke zu erzielen, kann vorgesehen sein, daß die Triebwerke zwischen einer gemeinsamen Hauptschubrichtung und einer gegen die Hauptschubrichtung geneigten Schubrichtung schwenkbar sind. Somit kann entweder zur Erzielung eines großen Schubes die Schubrichtung aller Triebwerke in eine gemeinsame Richtung gerichtet werden, oder es kann bei einem Schwenken der Triebwerke gegeneinander ein effektiver Schub erzielt werden, der geringer ist als die Summe der Schübe der einzelnen Triebwerke, da sich diese teilweise gegenseitig kompensieren. Bei einer entsprechenden Einstellung der Triebwerke kann statt einer geradlinigen Kraftwirkung auf den Satelliten auch ein Drehmoment auf den Satelliten ausgeübt werden, so daß bei einer geeigneten Triebwerkseinstellung eine Drehung des Satelliten um alle drei Achsen möglich ist.

Das erfindungsgemäße Regelungsverfahren umfaßt folgende Schritte:
Erfassung, Auswahl und Positionsbestimmung von Referenzzielen,
Schätzung von Modellparametern des Satelliten und externer Störungen, die auf den Satelliten einwirken,
Berechnung aktueller Lage- und Bewegungszustände des Satelliten und externer Störungszustände auf Basis der geschätzten Modellparameter mit Hilfe dynamischer Modelle der Satellitenbewegung,
Vergleich der erfaßten Position ausgewählter Referenzziele mit gespeicherten Referenzzieldaten,
Korrektur der berechneten Lage- und Bewegungszustände in Abhängigkeit von Vergleichsergebnis.

Es werden somit einerseits die aktuellen Modellparameter im Rahmen einer Schätzung mit berücksichtigt, aus denen dann mit Hilfe dynamischer Modelle aktuelle Lage- und Bewegungszustände und mit Hilfe entsprechender Modelle aktuelle externe Störungszustände berechenbar sind, wobei diese Lage- und Bewegungszustände und gegebenenfalls auch die externen Störungszustände den tatsächlichen Zuständen dadurch weiter angenähert werden können, daß ein Vergleich der gemessenen Referenzziele mit gespeicherten Referenzzieldaten erfolgt. Da nun jedoch die gespeicherten Referenzzieldaten wie beispielsweise Sternenkarten in der Regel selbst mit einer gewissen Unsicherheit versehen sind, kann auf Basis des Vergleichs und damit der neu vermessenen Referenzzieldaten eine Korrektur und damit eine Verbesserung der gespeicherten Referenzzieldaten erfolgen. Somit werden nicht nur die aktuellen Lage- und Bewegungszustände des Satelliten und gegebenenfalls externe Störungszustände unter Heranziehung der gespeicherten Referenzzieldaten genauer bestimmt, sondern es kann auch umgekehrt eine genauere Bestimmung der gespeicherten Referenzzieldaten erfolgen. Die Ergebnisse dieser Korrekturschritte können dadurch noch weiter verbessert werden, daß die einzelnen Rechen- und Korrekturschritte mehrfach in iterativer Form durchlaufen werden. Es werden dabei auch die geschätzten Modellparameter in Abhängigkeit von den korrigierten Ergebnissen neu bestimmt und an die korrigierten Werte angepaßt, anschließend wird auf Basis dieser korrigierten Schätzung erneut eine Berechnung der aktuellen Lage- und Bewegungszustände des Satelliten und gegebenenfalls der externen Störungszustände durchgeführt und es erfolgt wiederum ein Vergleich der gemessenen Referenzzieldaten mit den gespeicherten Referenzzieldaten, wobei wiederum in Abhängigkeit vom Vergleichsergebnis ein Korrekturschritt für die Lage- und Bewegungszustände und gegebenenfalls für die externen Störungszustände wie auch für die gespeicherten Referenzzieldaten erfolgen kann.

Die Lageregelung des Satelliten, die insbesondere dazu dienen soll, den Satelliten so gut wie möglich auf der für ihn vorgesehenen Idealbahn zu halten, erfolgt in Abhängigkeit eines Vergleichs der berechneten aktuellen Lage- und Bewegungszustände des Satelliten mit einer Referenztrajektorie. Entsprechend der Abweichung der aktuellen Lage- und Bewegungszustände des Satelliten von der Referenztrajektorie kann dann mit Hilfe eines Reglers und Stellgliedern eine Lageregelung des Satelliten erfolgen.

Grundsätzlich kann auch vorgesehen sein, daß eine Verbesserung der Referenzzieldaten nicht nur durch eine Berechnung und Korrektur an Bord des Satelliten erfolgt, sondern es können auch von Außen, beispielsweise von einer Bodenstation, verbesserte und korrigierte Referenzzieldaten zum Satelliten übertragen werden.
Die gespeicherten Referenzzieldaten können dazu benutzt werden, nach einer erfolgten Messung von Referenzzielen einen Teil dieser Referenzziele auszuwählen. Es können dabei die ermittelten Positionsdaten oder Muster der erfaßten Referenzziele mit gespeicherten Referenzzieldaten oder Mustern verglichen werden und beispielsweise solche Referenzziele ausgewählt werden, deren Abweichung von den gespeicherten Referenzzieldaten kleiner ist, als ein vordefinierter Wert. So werden beispielsweise nur solche Referenzziele wie zum Beispiel Sterne berücksichtigt, deren ermittelte Position nur wenig von den gespeicherten Referenzzieldaten wie beispielsweise Sternenkarten abweicht. Werden die Referenzziele auf eine solche Weise ermittelt, so kann für die ausgewählten Ziele eine Reduktion der Daten erfolgen, da bei einer einmal erfolgten eindeutigen Identifikation und Zuordnung der Referenzziele zu bereits bekannten Zielen lediglich noch gewisse, charakterisierende Daten wie zum Beispiel Sternenposition, Helligkeit und eventuell auch Farbspektrum weiterverarbeitet werden müssen.

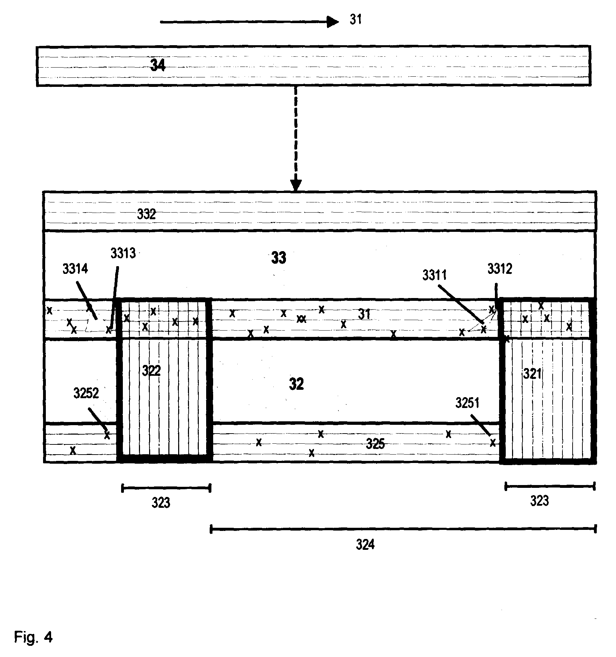

Ein spezielles Ausführungsbeispiel der vorliegenden Erfindung wird nachfolgend anhand der Figuren 1 bis 4 erläutert.

Es zeigen:
- Fig. 1:: Schematische Darstellung der Bewegung eines scannenden Satelliten
- Fig. 2:: Schematische Darstellung der Düsenanordnung des Satelliten
- Fig. 3:: Das Blockschaltbild des Regelkreises,
- Fig. 4:: Den Aufbau des sich selbst verbessernden onboard Sternkatalogs

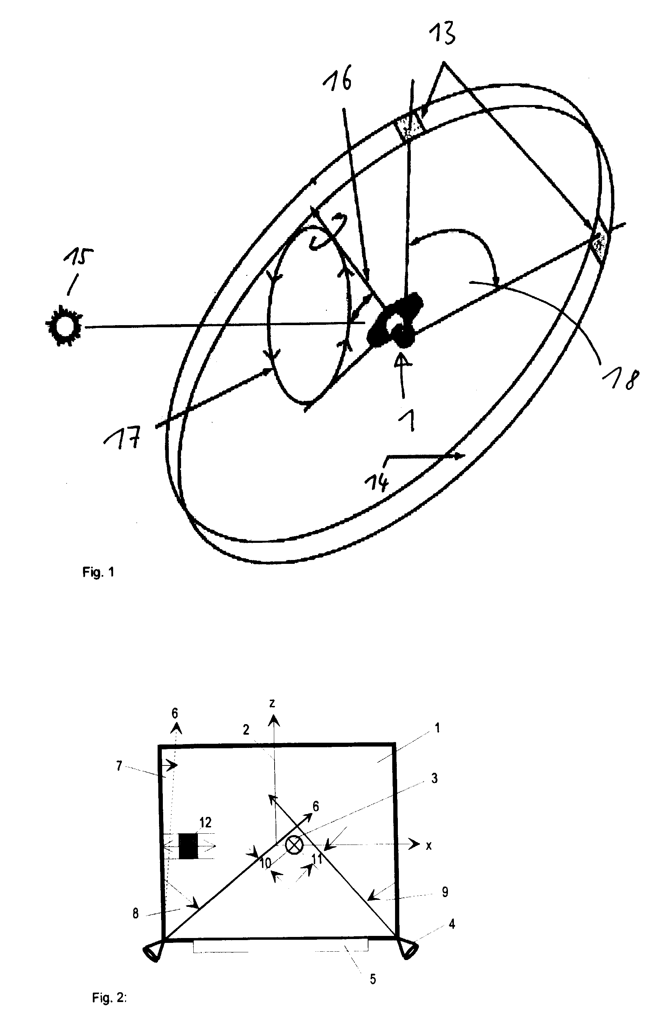

Fig. 1 zeigt schematisch einen scannenden Satelliten, der mit Hilfe von zwei Sensoren einen Streifen 14 des Weltraumes scannt, wobei die Sensoren so im Satelliten 1 angeordnet sind, daß sie um einen Winkel 18 voneinander getrennte Bereiche 13 des Streifens 14 scannen. Bei dem Scanvorgang rotiert der Satellit 1 um eine Achse 16. Die Achse 16 kann zusätzlich eine Nutationsbewegung 17 durchführen, deren Frequenz jedoch in der Regel deutlich geringer ist als die Frequenz der Rotation des Satelliten 1 um die Achse 16. Die Satellitenbewegung kann so eingestellt werden, daß die Satellitenachse 16 z.B. immer eine konstante Orientierung der Achse 16 zu einem Referenzziel wie z.B. der Sonne 15 aufweist.
Ein Satellit wie in Figur 1 dargestellt kommt in der Regel für wissenschaftliche Anwendungen in Frage. Viele von diskutierten oder bereits geplanten wissenschaftlichen Weltraummissionen, davon auch die von scannenden Satelliten, stellen extreme Anforderungen an die Lage- und Bahnregelungsgenauigkeit des Satelliten. Im folgenden wird ein Verfahren zur Regelung eines scannenden Satelliten vorgeschlagen, das Lageregelungsgenauigkeiten im sub milli Bogensekundenbereich (mas) ermöglicht. Die Problematik von mas-Regelungen besteht darin, geeignete Stellglieder mit genügend kleinen Störkräften bzw. Momenten zu finden und zum weiteren darin, daß insbesondere für scannende Satelliten keine genügend genaue Referenz zur Verfügung steht: Während man bei fest auf ein Ziel ausgerichteten Missionen wie Weitraumteleskopen das Referenzsignal direkt aus den Abweichungen von diesem Ziel ermitteln kann, erfordern scannende Satelliten die genaue Einhaltung einer Referenztrajektorie. Diese kann bei hohen Genauigkeiten nur über die Vermessung von Zielen kontrolliert werden, deren Position hinreichend genau bekannt ist. Werden als Ziele Sterne herangezogen, ist die Genauigkeit der Referenztrajektorie durch die Genauigkeit des verwendeten Sternkatalogs bestimmt, die bestenfalls im Bereich einiger mas liegt. Bei wissenschaftlichen Missionen, deren Inhalt nun gerade in einer deutlichen Verbesserung der bestehenden Sternkataloge besteht, hat man sich bisher damit beholfen, daß man die Sternpositionen relativ zum Satellitenkoordinatensystem mit geeignet ausgelegten Teleskopen vermessen hat und die inertiale Position der Sterne durch Rekonstruktion der Satellitenbewegung relativ zu diesem Inertialsystem am Boden ermittelt hat. Diese Rekonstruktion entspricht dabei aus regelungstechnischer Sicht einer Parameteridentifikation der Satellitendynamik und der auf den Satelliten einwirkenden Störkräfte und Momente, d.h. es werden die Parameter eines die Satellitenbewegung beschreibenden dynamischen Modells ermittelt. Die Güte der Ergebnisse hängt dabei vor allem von der Charakteristik der auf den Satelliten einwirkenden Störungen (Störspektrum) ab und der zur Verfügung stehenden ungestörten Meßzeit. Werden zur Regelung wie bei einer bereits durchgeführten Mission Kaltgasdüsen eingesetzt, sind die nutzbaren Meßzeiten durch die Zeiten zwischen den einzelnen Düsenpulsen begrenzt, die durch aufwendige Optimierungen in den Bereich einer Satellitenumdrehung zu bringen sind. Untersuchungen haben gezeigt, daß sich die Rekonstruktionsgenauigkeit (Güte der Parameteridentifikation) deutlich verbessern läßt, wenn man mehrere Satellitenumdrehungen zu einem Meßintervall zusammenfassen kann. Dieses setzt eine kontinuierlich wirkende Regelung voraus. Gegenstand der im folgenden beschriebenen Erfindung ist es daher, ein Regelungskonzept anzugeben, daß mittels einer kontinuierlichen Regelung ununterbrochene Messungen erlaubt und zugleich den Einfluß kritischer Störungen auf die Lagebewegung des Satelliten minimiert, so daß sich mit dem Gesamtsystem Satellit / Bodendatenrekonstruktion gegenüber herkömmlichen Ansätzen bessere Ergebnisse erzielen lassen. Dabei lassen sich aufgrund der nichtlinearen Charakteristik insbesondere der Datenrekonstruktion (Parameteridentifikation) Regelung und Datenrekonstruktion nicht unabhängig voneinander betrachten.

Auf einen Satelliten wirkt eine Vielzahl von Störungen, die von Gravitationskräften / Momenten bis hin zu Änderungen im Sonnenwind reichen und eine weites Frequenzspektrum abdecken. Als besonders kritisch haben sich magnetische Störungen erwiesen, die durch die Wechselwirkung des Erdmagnetfeldes oder des interplanetaren Magnetfeldes mit dem Rest-Dipolmoment des Satelliten entstehen. Bei sorgfältiger Auslegung des Satelliten lassen sich u.U. diese Momente auf eine Größenordnung von 1e-8 Nm reduzieren. Diese Größenordnung ist für den hier diskutierten sub mas Genauigkeitsbereich als immer noch beträchtlich anzusehen. Kontinuierlich wirkende Stellglieder sollten daher ein Störspektrum aufweisen, das im Bereich dieser natürlichen Störungen liegt. Für derartig extreme Anforderungen werden zur Zeit elektrische Triebwerke entwickelt, die einen maximalen Schub von z.B. 25 mikro N entwickeln. Der minimal erzeugbare Schub liegt in der Größenordnung von ca. 0.1 mikro N. Den von diesen Triebwerken erzeugbaren Momenten sind ebenfalls untere Grenzen gesetzt, da sich der Hebelarm nicht beliebig verkleinern läßt. Einschränkungen ergeben sich hier meistens aus der Satellitenkonfiguration.

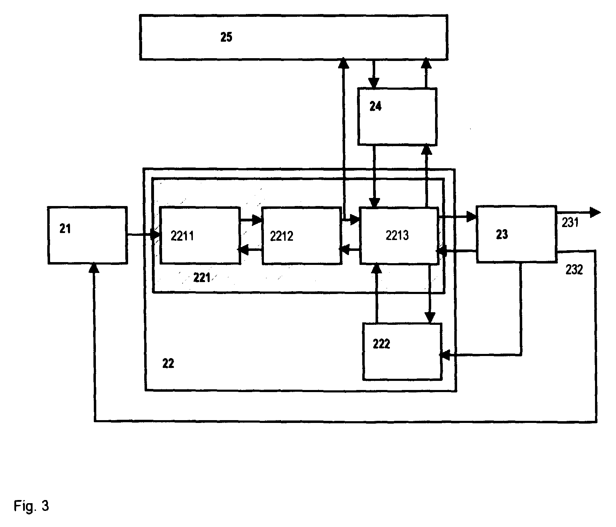

Um bei gegebenem Minimalschub dennoch zu Momenten in Größenordnungen der natürlichen Störmomente zu gelangen, wird entsprechend Fig. 2 statt einer achsenbezogenen Anordnung der Düsen ein unerwünschter Effekt einer anderen bekannten Düsenanordnung zur Reduktion der Momente ausgenutzt: Fig. 2 zeigt dabei einen Schnitt durch eine Anordnung mit 4 Düsen 4, die üblicherweise zur Erzeugung eines Schubes in +z-Richtung, die der Drehachse 16 des Satelliten 1 in Figur 1 entspricht, benutzt wird. Der Schwerpunkt 3 fällt dabei nicht notwendigerweise mit dem Ursprung des Satelliten-Koordinatensystems 2 zusammen. Im Bereich 5 soll eine Anbringung der Düsen nicht erfolgen, da dieser Platz für eine andere Satelliteneinrichtung wie z.B. einen Radiator benötigt werden soll. Bei den bisher eingesetzten Anordnungen sind die 4 Düsen 4 so angeordnet, daß zwar ihre Hauptschubrichtung 6 in dieselbe Richtung (+z) zeigt, durch eine Anstellung nach außen können aber gleichzeitig Momente um alle 3 Achsen erzeugt werden (gezeigt ist hier nur der Winkel 7 für Momente um die y-Achse). Dabei wird zur Erzielung einer möglichst hohen Effizienz der Anstellwinkel 7 zwischen der z-Achse und 6 möglichst klein gehalten. D.h. die übliche Anordnung erzeugt hohe Kräfte in z-Richtung, aber auch gleichzeitig hohe Momente um die x- und y-Achse. Da für die vorgesehene Aufgabenstellung aber Momente um alle 3 Achsen auf Kosten der Effizienz reduziert werden müssen, werden der Anstellwinkel 7 soweit auf 8, 9 vergrößert, daß sich nur noch kleine Hebelarme 10 und 11 ergeben. Unsicherheiten hinsichtlich der Schwerpunktlage lassen sich bekannterweise dadurch kompensieren, daß man die Schubrichtung durch Lagerung der Düsen mittels geeigneter, in 2 Achsen drehbaren Mechanismen steuert oder den Schwerpunkt durch verschiebbare Massen 12 justiert. Erstere Lösung hat den Vorteil, daß man bei Manövern zur Erzielung höherer Momente die Winkel wieder von 8 auf 7 reduzieren kann.

Mit dieser Düsenanordnung kann die Voraussetzung für die im folgenden beschriebene kontinuierliche Lageregelung in allen drei Achsen geschaffen werden, da sich mit Hebelarmen im cm-Bereich oder darunter die Momentenstörungen durch die Düsen in den Bereich der natürlichen Störungen bringen lassen. Andere Möglichkeiten sind durch den Düsenregelkreis unterlagerte Feinregelkreise gegeben, die z.B. die Nutzlast relativ zum Satelliten positionieren.

Im folgenden wird die Erzeugung eines Referenzsignals für einen scannenden Satelliten beispielhaft anhand einer Astrometrie-Mission beschrieben, da sich hier wohl die extremsten Anforderungen an die Glattheit der Scan-Bewegung ergeben. Glattheit bedeutet in diesem Zusammenhang, daß der Satellit nur die Abweichungen von der Referenztrajektorie zu minimieren hat. Die inertiale Ausrichtung der Trajektorie selbst muß typischerweise nur auf Bogensekunden genau sein und kann daher mit Hilfe vorhandener Zielkataloge überwacht werden. Als zu vermessende Ziele werden der genannten Aufgabenstellung entsprechend im folgenden Sterne angenommen. Eine möglichst hohe Glattheit der Bewegung ist hier wünschenswert, da die Ergebnisse der Datenreduktion am Boden (Parameteridentifikation) sowohl von der Amplitude der Strömungen abhängt als auch von der Komplexität der zu berücksichtigenden Modelle. Es ist daher die Aufgabe der im folgenden beschriebenen Erfindung Referenzsignale zu erzeugen, die eine möglichst weitgehende Ausregelung der auf den Satelliten einwirkenden natürlichen und vom Satelliten selbst erzeugten Störmomente ermöglicht. Endziel ist es dabei, die Referenztrajektorie so genau einzuhalten, wie es die Genauigkeit der relativ zum Satellitenkoordinatensystem erfolgenden onboard Sternpositionsbestimmung zuläßt.

Hierzu wird erfindungsgemäß eine ev. vereinfachte Form der am Boden im Batch-Processing (d.h. es werden alle vorliegenden Daten gleichzeitig betrachtet) stattfindenden Parameteridentifikation in einer rekursiven Form im Bordrechner implementiert und mit den so ermittelten Modellen laufend ein sich im Bordrechner befindlicher Sternkatalog verbessert. Aus diesem ,adaptiven' Sternkatalog werden dann die Referenzsignale für die Regelung erzeugt. Zur Erläuterung des Verfahrens zeigen:

Im folgenden werden zunächst die einzelnen Elemente dieses Regelkreises näher beschrieben und dann deren Zusammenwirken.

Die Sensoren 21 sitzen in der Fokalebene des die Ziele (z.B. Sterne) vermessenden Instruments (z.B. Teleskop). Typischerweise sind die Sensoren 21 bei astrometrischen Missionen CCDs (Charge Coupled Devices), die im TDI (Time Delayed Integration) - Mode betrieben werden (sollen). TDI-Mode bedeutet, daß die Ladungen entsprechend der Sternbewegung (Satellitenbewegung) in Scan-Richtung auf dem CCD mitgeschoben werden. Hierzu wird vom Regler 23 ein der Satellitenscangeschwindigkeit entsprechendes Taktsignal 232 geliefert.

Die Positionsermittlung 2212 der Sterne relativ zum Satellitenkoordinatensystem erfolgt bei hohen Genauigkeitsanforderungen mit Hilfe Modell basierter Algorithmen, die neben einem Modell der Sternabbildung auf dem CCD auch noch den Einfluß der Satellitenbewegung berücksichtigen können, die von dem Filter 2213 geschätzt wird. Diese Algorithmen können gegebenenfalls auch zur Datenreduktion verwendet werden, indem für alle einem Modell entsprechenden Sterne nur ihre Positionen und ev. noch Größe (Magnitude) und Sternfarbe zum Boden gesendet werden. Alle nicht diesem Muster entsprechenden Sternabbildungen werden komplett zum Boden gesendet. Für den Meßprozeß selbst werden nur den vorgegebenen Mustern entsprechende Sterne mit hohem Informationsgehalt, d.h. geeigneter Genauigkeit durch die Vorrichtung 2211 ausgewählt. Die Referenzsignale für den Regler 23 werden von dem Filter 2213 geliefert, daß zur Schätzung der Geschwindigkeiten und der Lage Modelle sowohl der Satellitendynamik, der Störungen, der Stellglieder und gegebenenfalls auch des Meßprozesses enthält. Da die Parameter des Filter a priori nur schlecht bekannt sind und zudem zeitvariabel sind, müssen sie mit Hilfe der Parameteridentifikation 222 onboard geschätzt werden. Hierzu wird wie bereits erwähnt eine ev. vereinfachte rekursive Version des Bodendatenreduktionsprozesses im Bordrechner implementiert. Das Zusammenspiel Filter 2213, Regler 23 und Parameteridentifikation 222 entspricht weitgehend den aus Regelungstechnik bekannten adaptiven Regelkreisen, wobei hier allerdings nicht die Reglerparameter angepaßt werden, sondern die des Schätzfilters (Kalmanfilters) 2213. Das Filter ermittelt aus von mehreren in der Fokalebene hintereinander geschalteten CCDs Geschwindigkeitssignale anhand der gemessenen Zeiten für die Durchgänge der ausgewählten Sterne. Zusammen mit den im Filter vorhandenen dynamischen Modellen ergibt sich so schon eine recht gute Schätzung der Satellitendrehraten. Zur weiteren Genauigkeitssteigerung kann ev. der Block 221 zu einem extended Kalmanfilter zusammengefaßt werden, das gleichzeitig Satellitenbewegung und Sternpositionen relativ zum Satellitenkoordinatensystem schätzt. Das (nichtlineare) extended Kalmanfilter kann gegebenenfalls auch noch zur Parameteridentifikation benutzt werden, d.h. auch noch um die Parameteridentifikation 222 zum Meßsystem 22 erweitert werden.

Aufintegration der Geschwindigkeit zur Lage führt zu einem Wegdriften der Lageschätzung von der tatsächlichen Lage, die mit Hilfe des bekannten Strapdown-Verfahrens korrigiert werden muß, d.h. die geschätzten Sternpositionen müssen mit den bekannten, im onboard Sternkatalog 24 abgespeicherten Positionen verglichen werden und das Differenzsignal zur Stützung des Filters 2213 herangezogen werden. Hier steht man nun vor dem Problem, daß die a priori bekannten Sternpositionen viel zu ungenau für die gewünschte hochgenaue Einhaltung der Referenztrajektorie sind. Es muß also ein Verfahren im Bordrechner implementiert werden, daß eine kontinuierliche Verbesserung des Sternkatalogs von Umdrehung zu Umdrehung erlaubt und somit auch zu einer stetigen Verkleinerung der Abweichungen von der Referenztrajektorie führt. Da jeder Stern durch wiederholtes Abscannen mehrfach vermessen wird, ergibt sich dann durch die nach dem Konvergieren dieses Vorgangs kleinere Streuung der Sternpositionen bei der am Boden erfolgenden Datenreduktion eine deutliche Genauigkeitssteigerung der Ergebnisse. Der onboard Sternkatalog wird dabei von Zeit zu Zeit vom Boden aus verbessert, sobald die Bodendatenreduktion genauere Positionen ermittelt hat (Bodensternkatalog 25, der Datenaustausch findet dabei zu Kontrollzwecken in beide Richtungen statt).

Der Verbesserungsvorgang des onboard Ziel (Stern) - Katalogs läuft erfindungsgemäß wie folgt ab: Es wird angenommen, daß das Instrument zur Erhöhung der Genauigkeiten aus 2 um den Winkel 324 (entspricht dem Winkel 18 in Fig. 1) gegeneinander versetzte Instrumente mit den Gesichtsfeldern 321 und 322 besteht. Diese erfassen die Bereiche 13 aus Figur 1. Der aktuelle Scan 32 überlappt sich dabei mit dem vorherigen im Bereich 331 und mit dem folgenden im Bereich 325. Die Größe der Überlappungsbereiche ergibt sich aus den Genauigkeitanforderungen des Systems und der Zieldichte. Jeder Stern im Überlappungsbereich der einzelnen Scans wird nun nach einer dem Separationswinkel 324 entsprechenden Zeit zum ersten Mal neu vermessen. Die zweite Messung desselben Zieles erfolgt nach der Drehung um 360°. Die dritte nach Schließen des Kreises durch das zweite Fenster. Sich im Überlappungsbereich 325 befindliche Sterne mit hohem Informationsgehalt d.h. hoher Meßgenauigkeit werden in den Katalog eingetragen, sobald sie das Fenster 21 verlassen haben. Der Eintrag wird dabei mit der von dem Filter 2213 geschätzten Position versehen. Sterne, die die Fenster im Überlappungsbereich 331 mit dem vorherigen Scan verlassen, werden anhand der beim letzten Scan erfolgten Eintragungen identifiziert. Hierbei können bekannte Mustererkennungsverfahren für autonome Sternsensoren zum Einsatz kommen oder bei hohen Schätzgenauigkeiten des Filters 2213 die Sterne anhand der geschätzten Durchlaufzeiten für den Winkel 324 und ev. auch für den Kreisschluß nach 360° identifiziert werden. Da die Positionswerte der identifizierten Sterne aufgrund der (noch) nicht glatten Satellitenbewegung zwischen beiden Sternen unterschiedlich ausfallen, wird onboard jetzt eine Ausgleichsrechnung für die Sternpositionen vorgenommen. Diese Ausgleichsrechnung bezieht alle Sterne in einem gegebenen Zeitintervall ein, dessen Größe von der aktuellen Glattheit der Scanbewegung und der Abtastrate des Filters 2213 abhängig ist. Die Sternpositionen werden dabei entsprechend ihrer Schätzgenauigkeit berücksichtigt, d.h. zusätzlich zur Position wird im Katalog ihre aktuelle Schätzgenauigkeit eingetragen. Nach Beendigung der Ausgleichsrechnung wird die Position der Neueinträge korrigiert und der Eintrag für die Schätzgenauigkeit auf den aus der Ausgleichsrechnung ermittelten Werten gesetzt. (Eine erste Verbesserung 3252 der Positionsgenauigkeiten erfolgt dabei wie erläutert schon nach Durchgang des Sterns 3251 durch das zweite Fenster 322.) Die verbesserten Sternpositionen werden nun umgehend dem Filter 2213 zugeführt und damit die Positionsschätzung verbessert. Dieser Vorgang kann ähnlich wie bei den bekannten iterativen extended Kalmanfiltern zur weiteren Genauigkeitssteigerung iterativ erfolgen. Das Ergebnis der Iteration wird dann zur Regelung herangezogen, indem die Abweichungen der vom Filter 2213 geschätzten Positionen und Geschwindigkeiten (statt der direkten Messungen) von den aus der Solltrajektorie ermittelten Werten zur Regelung benutzt werden. Die Berücksichtigung der Bodenausgleichsrechnung erfolgt in einfacher Weise dadurch, daß Einträge im onboard Katalog für den letzten Überlappungsbereich 331 mit den aktuellen Bodendaten (Positionen und Genauigkeit) überschrieben werden. Das Verfahren ist auch auf andere Detektoren und Ziele als CCDs und Sterne übertragbar.

Im Gegensatz zu einer aufwendigen Stärgrößenminimierung durch Optimierung der Hardware (Satellit und Nutzlast) stellt das hier beschriebene Regelungsverfahren eine mit deutlich geringerem technischen Aufwand und Risiko verbundene (wiederverwendbare) Softwarelösung dar.

### Bezugszeichenliste

- 1: Satellit
- 2: Satelliten-Koordinatensystem
- 3: Schwerpunkt
- 4: Düsen
- 5: Radiatorbereich
- 6: Hauptschubrichtung
- 7, 8, 9: Anstellwinkel
- 10, 11: Hebelarme
- 12: verschiebbare Masse
- 13: aktuelle Scanbereiche
- 14: Scanstreifen
- 15: Sonne
- 16: Drehachse des Satelliten
- 17: Nutationsbewegung der Drehachse
- 18: Winkel zwischen den aktuellen Scanbereichen
- 21: Fokalebenen Sensoren
- 22: Meßsystem
- 221: Filter mit
- 2211: Auswahlmechanismus für Sterne mit hohem Informationsgehalt
- 2212: Centroiding (Zentrierungs) Algorithmus zur genauen Positionsbestimmung der Sterne relativ zum Satellitenkoordinatensystem
- 2213: Filter mit dynamischen Modellen der Satellitenbewegung
- 222: rekursive onboard Parameteridentifikation zur Bestimmung der Filter Parameter
- 23: Regler
- 231: (Ansteuerungsignale für die) Satellitenstellglieder (z.B. elektrische Triebwerke)
- 232: Taktsignale für die Fokalebenen Sensoren
- 24: Onboard Sternkatalog
- 25: Am Boden ermittelter Sternkatalog
- 31: Scanrichtung
- 32: Aktueller Scanstreifen
- 321: 1. Sensorfenster
- 322: 2. Sensorfenster
- 323: Gesichtsfeld (z.B. 0.5°)
- 324: Separationswinkel der beiden Fenster (z.B. 60°)
- 325: Überlappungsbereich mit dem nachfolgenden Scan
- 3251: neuer Eintrag in den Zielkatalog (z.B. Sternkatalog)
- 3252: erste Verbesserung des Eintrages 3251 nach Drehung des Satelliten um 324
- 33: vorheriger Scan
- 331: Überlappungsbereich mit 32
- 3311: benutztes Zielmuster (Sternmuster) zum Wiederfinden der Sterne im Katalog nach Durchgang durch das Fenster 321
- 3312: aktuell berechnete Verbesserung der Zielposition für Fenster 321
- 3313: aktuell berechnete Verbesserung der Zielposition für Fenster 322
- 3314: Zielmuster zum Wiederfinden der Ziele im Katalog nach Durchgang durch das Fenster 322
- 332: Überlappungsbereich mit dem vorletzten Scan
- 34: Überlappungsbereich mit den am Boden berechneten und hochgeladenen Zielpositionen

## Patentansprüche

1. Regelungsanordnung für einen Satelliten, mit
a) mindestens einen Sensor (21) zur Erfassung von Referenzzielen, verbunden mit
- einer Einrichtung (2211) zur Auswahl von Referenzzielen und
- einer Einrichtung (2212) zur Positionsbestimmung der Referenzziele,
b) einer Einrichtung (222) zur Schätzung von Modellparametern des Satelliten und externer Störungen, die auf den Satelliten wirken,
c) einem ersten Speicher (24), der einen Referenzzielkatalog enthält,
d) einem zweiten Speicher, der eine Referenztrajektorie enthält,
e) einem Regler (23), der mit Stellgliedern (231) zur Lageregelung des Satelliten verbunden ist,
f) einem Filter (2213), der mit der Einrichtung (2212) zur Positionsbestimmung der Referenzziele, der Einrichtung (222) zur Schätzung von Modellparametern, dem ersten Speicher (24) und dem Regler (23) verbunden ist.

2. Regelungsanordnung nach Anspruch 1, dadurch gekennzeichnet, daß das Filter (2213), die Einrichtung (2212) zur Positionsbestimmung der Referenzziele und die Einrichtung (2211) zur Auswahl von Referenzzielen in einer erweiterten Filteranordnung (221) zusammengefaßt sind.

3. Regelungsanordnung nach Anspruch 2, dadurch gekennzeichnet, daß das Filter (2213), die Einrichtung (2212) zur Positionsbestimmung der Referenzziele, die Einrichtung (2211) zur Auswahl von Referenzzielen und die Einrichtung (222) zur Schätzung von Modellparametern in einer erweiterten Filteranordnung (221) zusammengefaßt sind.

4. Regelungsanordnung nach einem der Ansprüche 2 bis 3, dadurch gekennzeichnet, daß die erweiterte Filteranordnung (221, 22) als extended Kalman-Filter ausgebildet ist.

5. Regelungsanordnung nach einem der Ansprüche 1 bis 4, dadurch gekennzeichnet, daß als Stellglieder (231) elektrische Triebwerke vorgesehen sind.

6. Regelungsanordnung nach Anspruch 5, dadurch gekennzeichnet, daß die Triebwerke zwischen einer gemeinsamen Hauptschubrichtung (2) und einer gegen die Hauptschubrichtung (2) geneigten Schubrichtung schwenkbar ausgestaltet sind.

7. Regelungsverfahren für einen Satelliten mit folgenden Schritten:
a) Erfassung, Positionsbestimmung und Auswahl von Referenzzielen,
b) Schätzung von Modellparametern des Satelliten und externer Störungen, die auf den Satelliten einwirken,
c) Berechnung aktueller Lage- und Bewegungszustände des Satelliten und externer Störungszustände auf Basis der geschätzten Modellparameter mit Hilfe dynamischer Modelle der Satellitenbewegung und externer Störungen,
d) Vergleich der erfaßten Position ausgewählter Referenzziele mit gespeicherten Referenzzieldaten,
e) Korrektur der berechneten Lage- und Bewegungszustände in Abhängigkeit vom Vergleichsergebnis.

8. Regelungsverfahren nach Anspruch 7, dadurch gekennzeichnet, daß eine Korrektur der gespeicherten Referenzzieldaten in Abhängigkeit vom Vergleichsergebnis erfolgt.

9. Regelungsverfahren nach Anspruch 7 oder 8, dadurch gekennzeichnet, daß die Rechen- und Korrekturschritte mehrfach iterativ durchlaufen werden.

10. Regelungsverfahren nach einem der Ansprüche 7 bis 9, dadurch gekennzeichnet, daß eine Lageregelung des Satelliten in Abhängigkeit eines Vergleichs der berechneten aktuellen Lage- und Bewegungszustände des Satelliten mit einer Referenztrajektorie erfolgt.

11. Regelungsverfahren nach einem der Ansprüche 7 bis 9, dadurch gekennzeichnet, daß zur Auswahl der Referenzziele die ermittelten Positionsdaten mit gespeicherten Referenzzieldaten verglichen werden und nur solche Referenzziele ausgewählt werden, deren Abweichungen von den gespeicherten Referenzzieldaten kleiner ist als ein vordefinierter Wert.

12. Regelungsverfahren nach einem der Ansprüche 7 bis 10, dadurch gekennzeichnet, daß lediglich ein definierter Teil der Meßdaten der ausgewählten Referenzziele im Regelungsverfahren weiterverarbeitet werden.
